# FASCICULE DE BREVET EUROPEEN

(11) **EP 0 305 294 B1**
(45) Date de publication et mention de la délivrance du brevet: **07.04.1993**
(21) Numéro de dépôt: 88402160.1
(22) Date de dépôt: 25.08.1988
(51) Int. Cl.: H01S 3/082

(54) **Appareil à laser adaptable**
Abstimmbarer Laser-Apparat
Adaptable laser apparatus

(30) Priorité: 26.08.1987 FR 8711950
(43) Date de publication de la demande: 01.03.1989
(73) Titulaire: TECHNOMED INTERNATIONAL, 69500 Bron (FR)
(72) Inventeur: Guillet, Hubert, F-69100 VILLEURBANNE (FR); Vialle, Dominique, F-94440 Villecresnes (FR)
(74) Mandataire: Portal, Gérard

(56) Documents cités:
- DE-A- 2 809 007
- FR-A- 2 607 329
- US-A- 3 569 859
- INORGANIC MATERIALS, vol. 10, no. 12, décembre 1974, pages 1911-1912, Plenum Publishing Corp., New York, US; A.A. KAMINSKII: "Multibeam lasers"

## Description

La présente invention concerne un appareil à laser adaptable, par exemple susceptible d'émettre un rayonnement pouvant avoir des longueurs d'onde différentes.

Quoique non exclusivement, l'appareil à laser selon l'invention est plus particulièrement destiné à des applications thérapeutiques, mais d'autres applications dudit appareil pourraient être envisagées telles que pour le traitement et l'usinage de pièces métalliques.

Dans son application préférentielle, l'appareil à laser peut émettre un rayonnement ayant soit une longueur d'onde de 1,06 micromètre, qui est spécifiquement appropriée à la coagulation et l'hémostase des tissus humains, soit une longueur d'onde de 1,32 micromètre, qui est alors spécifiquement appropriée à la chirurgie par vaporisation desdits tissus.

On connaît déjà des appareils à laser dont la réalisation permet d'émettre un rayonnement pouvant avoir deux longueurs d'onde spécifiques.

Par exemple, le document US-A-3 569 859 décrit un appareil à laser comprenant un tube à plasma disposé dans une cavité résonante constituée par deux réflecteurs, dont l'un est totalement réfléchissant, tandis que l'autre est partiellement réfléchissant. Le tube à plasma contenant un gaz, tel que par exemple du dioxyde de carbone, est relié à un générateur à courant continu permettant d'exciter ledit gaz. Par ailleurs, un élément déplaçable en sulfure de zinc peut être disposé, coaxialement, entre le tube et le réflecteur partiellement réfléchissant, et est destiné à faire office de filtre.

Ainsi, lorsque l'élément en sulfure de zinc est situé extérieurement à ladite cavité, la longueur d'onde du rayonnement émis par l'appareil est de l'ordre de 10,6 micromètres, tandis que, lorsque l'élément en sulfure de zinc est situé dans la cavité, entre le réflecteur partiellement réfléchissant et le tube, la longueur d'onde du rayonnement émis par l'appareil est de l'ordre de 9,6 micromètres, car une partie du spectre émis est absorbée sélectivement par ledit élément filtrant.

Le document PCT WO 86/03958 décrit un appareil à laser destiné aux traitements des tissus humains. L'appareil est de conception sensiblement analogue à celui précédemment décrit, mais comporte, à la place de l'élément filtrant déplaçable en sulfure de zinc, un réservoir susceptible de contenir un gaz et disposé entre le tube à plasma et un miroir partiellement réfléchissant. Ainsi, lorsque le vide est réalisé, au moyen d'une pompe, dans le réservoir, la longueur d'onde du rayonnement émis est de l'ordre de 10,6 micromètres, tandis que, lorsqu'un gaz, par exemple du SF6, est injecté dans le réservoir par des moyens d'alimentation appropriés, la longueur d'onde du rayonnement émis correspond alors sensiblement à 9,6 micromètres, le gaz SF6, faisant office de filtre au rayonnement émis par le tube.

On connaît également, par le document EP-A-0 109 959, un appareil du type à laser YAG, pour applications thérapeutiques, et qui comprend notamment, comme milieu actif, un barreau réalisé en YAG, un miroir réfléchissant, un miroir partiellement réfléchissant et un prisme pivotant commandable, disposé entre le barreau en YAG et le miroir réfléchissant. Le barreau est relié notamment à une source d'énergie. Ce type d'appareil à laser YAG est susceptible d'émettre un rayonnement pouvant avoir au moins deux longueurs d'onde spécifiques à savoir soit 1,06 micromètre, soit 1,3 micromètre. La modification de la longueur d'onde du rayonnement émis est obtenue par le pivotement approprié du prisme, actionné par un levier ou analogue. Grâce à l'adjonction d'une fibre optique audit appareil, un praticien peut ainsi traiter, par l'utilisation appropriée de l'une ou l'autre des longueurs d'onde spécifiques, différents tissus humains.

Ces appareils, sommairement décrits ci-dessus, présentent notamment l'inconvénient de prévoir des éléments supplémentaires au système laser proprement dit comprenant un milieu actif et une cavité résonante, afin de permettre, par leur interposition dans le trajet du rayonnement émis, la modification de la longueur d'onde de celui-ci. Cela entraîne par conséquent des problèmes d'alignement, notamment angulaire, des réflecteurs de la cavité résonante entre eux, ainsi qu'entre lesdits réflecteurs et ledit milieu actif, toujours techniquement difficiles à surmonter.

On connaît aussi, notamment par les documents PCT WO 85/01445 et DE-2 809 007, d'autres appareils à laser susceptibles d'émettre un rayonnement de longueurs d'onde différentes.

Chaque appareil comporte essentiellement deux sources lasers indépendantes, en général une source laser YAG et une source laser CO2, qui émettent chacune un rayonnement de longueur d'onde spécifique. Par l'intermédiaire de moyens de commutation des deux sources lasers, l'utilisation peut modifier et choisir la longueur d'onde d'émission appropriée. Toutefois, ces appareils, du fait qu'ils utilisent deux sources lasers indépendantes, sont coûteux, encombrants et néanmoins compliqués, puisqu'il est nécessaire de prévoir des moyens d'alignement des rayonnements émis par lesdites sources.

La présente invention a pour but de remédier aux inconvénients mentionnés ci-dessus, et concerne notamment un appareil à laser susceptible d'émettre un rayonnement de longueurs d'onde différentes, et qui évite notamment l'agencement d'éléments supplémentaires au système laser proprement dit.

A cet effet, l'invention fournit un appareil à laser, du type comportant une cavité résonante qui comprend un ensemble de deux réflecteurs différents, à l'intérieur de laquelle est disposé un milieu actif susceptible d'engendrer un rayonnement sous l'action de moyens d'excitation reliés audit milieu actif, caractérisé en ce qu'il comporte au moins une cavité résonante supplémentaire, de structure semblable à la précédente, comprenant un ensemble de deux réflecteurs différents, et en ce qu'il est prévu des moyens pour la commande du déplacement desdites cavités résonantes, permettant d'amener par basculement l'une ou l'autre desdites cavités coaxialement audit milieu actif, l'ensemble des réflecteurs de la cavité résonante est porté par un support susceptible d'être déplacé, sous l'action des moyens de commande entre au moins deux positions distinctes, dont l'une correspond à l'alignement de l'ensemble des réflecteurs de ladite cavité résonante avec ledit milieu actif, tandis que l'autre des positions correspond à l'effacement dudit ensemble par rapport audit milieu actif ; et l'ensemble des réflecteurs de la cavité résonante supplémentaire est porté par un support susceptible d'être déplacé, sous l'action des moyens de commande, entre au moins deux positions distinctes, dont l'une correspond à l'alignement de l'ensemble des réflecteurs de ladite cavité résonante supplémentaire avec ledit milieu actif, tandis que l'autre des positions correspond à l'effacement dudit ensemble des réflecteurs de la cavité résonante supplémentaire par rapport au milieu actif.

Ainsi, grâce à l'invention, on peut commuter, sous l'action des moyens de commande, lesdites cavités résonantes. Par conséquent, l'appareil selon l'invention s'affranchit d'éléments annexes rapportés ou de sources lasers différentes.

Si ledit milieu actif est susceptible d'émettre un rayonnement pouvant avoir des longueurs d'onde différentes et si chaque couple de réflecteurs est adapté à l'une desdites longueurs d'onde, on voit que l'appareil selon l'invention engendre un rayonnement dont la longueur d'onde est différente selon que l'une ou l'autre desdites cavités est en relation avec ledit milieu actif.

Toutefois, la présente invention n'est pas limitée à cette application de changement de longueurs d'onde. En effet, on voit aisément que la commutation de cavités conformément à la présente invention, peut être mise en oeuvre pour obtenir, non pas plusieurs longueurs d'onde, mais plusieurs modes de fonctionnement (continu monomode, continu multimode, pulsé, déclenché) qui nécessitent des réflecteurs de cavité différents et/ou des composants supplémentaires.

Toutefois, dans une forme préférée de réalisation, les ensembles des réflecteurs de la cavité résonante et de la cavité résonante supplémentaire sont portés par un même support susceptible d'être déplacé entre au moins deux positions distinctes, dont l'une correspond à un alignement des réflecteurs de la cavité résonante avec ledit milieu actif et à l'effacement des réflecteurs de la cavité résonante supplémentaire, et dont l'autre correspond à un alignement des réflecteurs de la cavité résonante supplémentaire avec ledit milieu actif et un effacement des réflecteurs de la cavité résonante.

Cette réalisation permet ainsi de réduire le nombre de pièces nécessaires aux déplacements desdites cavités, et surtout d'avoir une même référence de positionnement desdites cavités puisqu'elles sont montées sur le même support.

Avantageusement, ledit support portant les ensembles de réflecteurs desdites cavités est susceptible de pivoter, sous l'action des moyens de commande, autour d'un axe de rotation disposé parallèlement à l'axe optique du rayonnement émis par ledit milieu actif. Ainsi, un simple basculement angulaire autour dudit axe permet de présenter l'une ou l'autre desdites cavités par rapport au milieu actif. Par ailleurs, des moyens de butée réglables peuvent être prévus sur ledit support permettant, en fonction de la position des moyens de commande, le réglage desdites cavités par rapport audit milieu actif.

Dans un mode préféré de réalisation, ledit support est constitué par une tige disposée parallèlement à l'axe dudit milieu actif, et sur laquelle est fixés, au voisinage de ses extrémités, respectivement, des flasques transversaux dans lesquels sont agencés lesdits réflecteurs. Lesdits moyens pour la commande du déplacement desdites cavités peuvent être constitués par au moins un vérin, ou analogue.

Dans une réalisation particulière, l'appareil à laser est caractérisé en ce que chaque flasque présente deux moyens de butée disposés approximativement dans le prolongement respectif des bords latéraux dudit flasque.

Selon une autre variante de réalisation, l'appareil à laser selon l'invention est caractérisé en ce qu'il est équipé d'un câble à fibre optique recevant par l'une de ses extrémités le rayonnement émis par le système laser, tandis que son autre extrémité est munie d'un instrument chirurgical approprié, un commutateur ou analogue étant prévu pour agir sur le moyen de commande en déplacement de positionnement des cavités résonantes en permettant ainsi aux praticiens d'utiliser le rayonnement approprié dont la longueur d'onde est spécifiquement adaptée à un type de traitement donné.

Selon encore une autre variante de réalisation, l'appareil à laser est caractérisé en ce que le laser est du type YAG, permettant l'émission d'un rayonnement dont la longueur d'onde peut être soit de 1,06, µm, soit de 1,32 µm, la première longueur d'onde étant spécifiquement adaptée à la coagulation et à l'hémostase des tissus, tandis que la seconde longueur d'onde est spécifiquement adaptée à la chirurgie.

Selon une autre variante de l'invention, l'appareil à laser selon l'invention est caractérisé en ce qu'il comprend un cristal adéquat ou un dispositif analogue dans une cavité spéciale ou à l'extérieur d'une cavité normale, afin d'obtenir une conversion de fréquence.

Les figures du dessin annexé feront bien comprendre comment l'invention peut être réalisée. Sur ces figures, des références identiques désignent des éléments semblables.

La figure 1 représente, en vue en perspective schématique, un mode de réalisation de l'appareil à laser selon l'invention, adapté à engendrer deux longueurs d'onde différentes.

La figure 2 représente une vue en plan de l'appareil qui montre notamment en coupe le support pivotant sur lequel sont montées lesdites cavités résonantes.

La figure 3 est une vue de dessus de la figure 2, qui montre notamment les moyens pour la commande du déplacement dudit support.

La figure 4 représente, à une échelle agrandie, une vue de côté du support illustrant notamment l'agencement des réflecteurs sur celui-ci.

La figure 5 représente une vue selon la ligne V-V de la figure 3 illustrant les moyens pour la commande du déplacement du support.

L'appareil à laser montré sur ces figures est destiné à émettre un rayonnement dont la longueur d'onde peut être choisie entre deux valeurs. L'une des applications préférentielles d'un tel appareil concerne le domaine médical, notamment le traitement des tissus humains effectué par endothérapie.

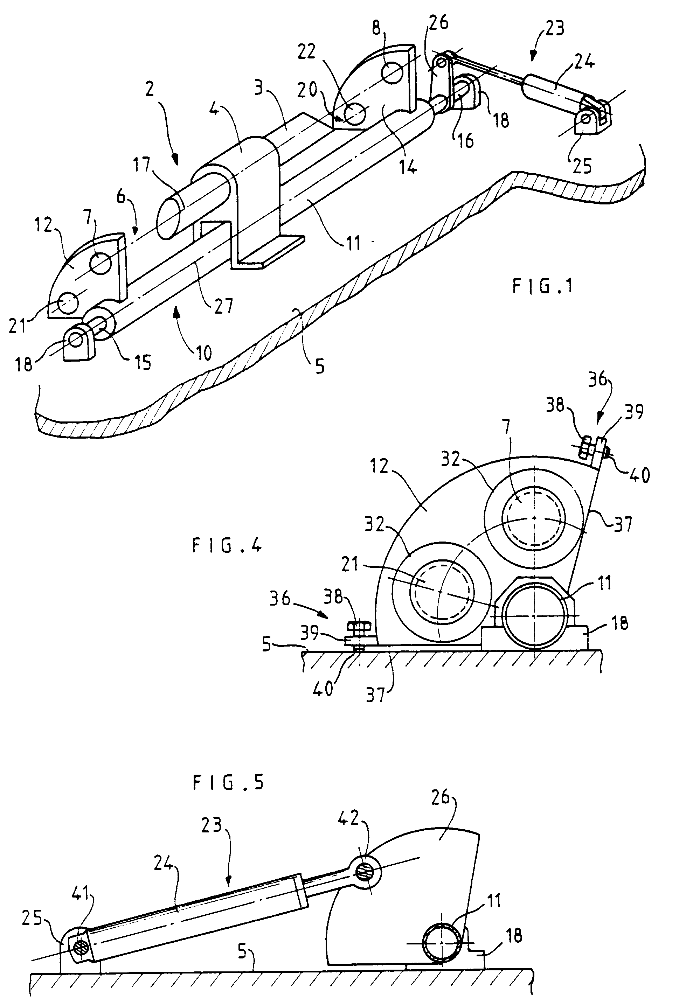

Sur la figure 1, l'appareil à laser schématiquement illustré comprend un milieu actif 2, en l'occurence un barreau 3 du type YAG, dont les moyens d'excitation, de pompage et de refroidissement n'ont pas été représentés mais sont bien connus en eux-mêmes.

Le barreau 3 est maintenu fixement dans un élément approprié 4 solidaire d'une table rigide 5 partiellement représentée. L'appareil comporte une cavité résonante 6 qui est constituée par un ensemble de deux réflecteurs 7 et 8 de pouvoir réfléchissant différent, disposés de part et d'autre dudit milieu actif 2. La cavité résonante 6 est portée par un support 10 constitué, dans ce mode de réalisation, d'une tige 11 et de deux flasques 12 et 14 fixés au voisinage des extrémités 15 et 16 de la tige 11. Celle-ci est agencée parallèlement à l'axe optique 17 du milieu actif 2 et les flasques 12 et 14, en forme de secteur angulaire, sont disposés chacun dans un plan perpendiculaire à ladite tige, et donc à l'axe optique du milieu actif 2.

La liaison entre les flasques 12 et 14 à la tige 11 est réalisée par exemple au moyen de soudure. Les extrémités 15 et 16 de la tige 11 sont portées par des paliers 18 fixés à la table rigide 5. Le réflecteur 7 est disposé dans le flasque 12, tandis que le réflecteur 8 est disposé dans le flasque 14.

Selon l'invention, l'appareil à laser comporte une cavité résonante supplémentaire 20 qui est également constituée par un ensemble de deux réflecteurs 21 et 22 de pouvoir réfléchissant différent, dont au moins le réflecteur partiel est différent du réflecteur partiel de l'ensemble 21, 22. Le réflecteur 21 est disposé dans le flasque 12, alors que le réflecteur 22 est, quant à lui, disposé dans le flasque 14. Ces deux cavités résonantes 6 et 20 sont parallèles entre elles et sont adaptées aux longeurs d'onde d'émission du milieu actif 2.

Comme on peut le voir sur la figure 1, il est prévu des moyens 23 pour la commande du déplacement du support 10. Ces moyens 23 sont définis par un vérin 24 dont une des extrémités est articulée à une chape 25 fixée à la table 5, et dont l'autre extémité est articulée à un levier 26 fixé au voisinage de l'extrémité 16 de la tige, et disposé dans ce mode de réalisation entre le flasque 14 et le palier 18 portant l'extrémité 16 de la tige 11.

Ainsi, lorsque le vérin 24 est actionné, il entraîne en rotation le support 10 auquel il est lié par le levier 26. Par conséquent, la tige 11 pivote autour de son axe de rotation 27, parallèle à l'axe du milieu optique, entraînant le pivotement des flasques 12 et 14 portant les cavités résonantes 6 et 20.

Le support 10 peut donc pivoter autour de l'axe 27 entre deux positions distinctes ; une première position, pour laquelle les réflecteurs 7 et 8 de la cavité résonante 6 sont alignés avec le milieu actif, et une second position, pour laquelle les réflecteurs 21 et 22 de la cavité résonante supplémentaire 20 sont alignés avec ledit milieu actif.

Par conséquent, le rayonnement émis par l'appareil à laser selon l'invention peut avoir deux longueurs d'onde différentes spécifiques selon que l'une, 6, ou l'autre, 20, desdites cavités est en relation avec ledit milieu actif 2. Chaque ensemble ou couple de réflecteurs est adapté pour engendrer un rayonnement de longueur d'onde spécifique, correspondant aux longueurs d'ondes d'émission dudit milieu actif. On réalise ainsi par des moyens mécaniquement simples mais précis, le changement de position desdites cavités résonantes, d'autant plus que celles-ci sont portées par le même support définissant alors une unique référence.

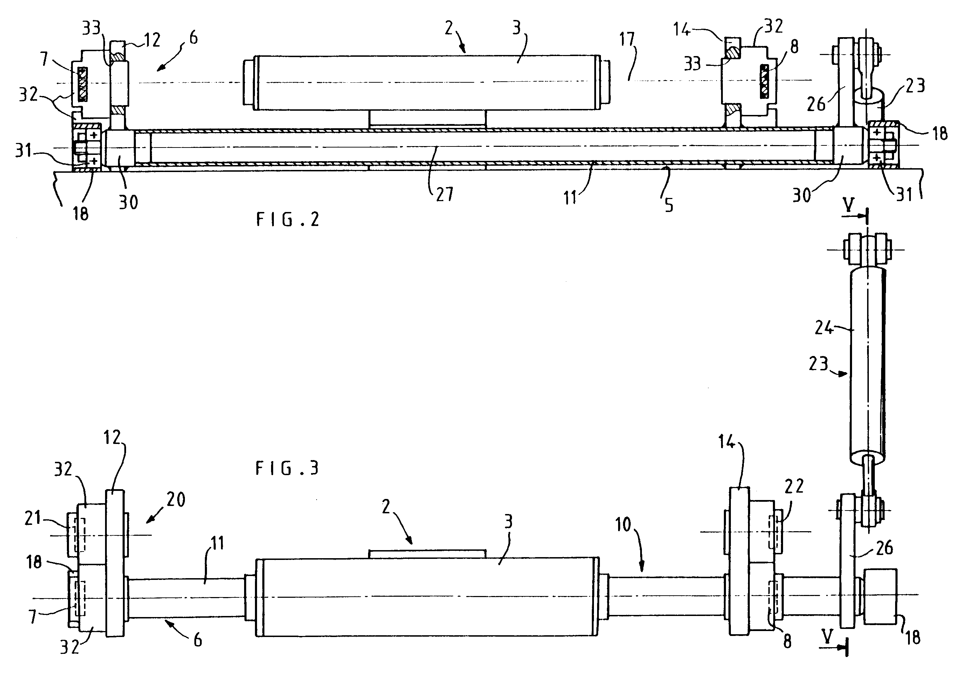

Les figures 2 à 5 apportent davantage de précision quant à la réalisation de l'exemple de réalisation décrit.

La figure 2 montre notamment en coupe le support 10 dont le tube 11 est obturé à ses extrémités 15 et 16 par des embouts 30 montés respectivement sur des roulements 31 logés dans les paliers 18.

Par ailleurs, chaque réflecteur 7, 8, 21 et 22 comme le montrent les figures 2, 3 et 4 est logé dans une douille amovible 32 qui coopère avec un perçage 33 ménagé dans les flasques respectifs. Afin de permettre le réglage de l'alignement de chacune des cavités résonantes 6 et 20 en fonction de la position occupée par le vérin 24, des moyens de butée réglables 36, illustrés sur la figure 4 sont par exemple fixés aux flasques 12 et 14. Chaque flasque présente alors deux moyens de butée 36 disposés approximativement dnas le prolongement respectif des bords latéraux 37 dudit flasque. Ces moyens de butée sont définis, dans ce mode particulier de réalisation et en regard de la figure 4 illustrant le flasque 12, par une vis de pression réglable 38 vissée par une patte 39 faisant saillie du bord latéral correspondant, dans le prolongement de celui-ci. En agissant sur ces vis, on peut régler facilement l'alignement de chaque cavité avec ledit milieu actif. Ainsi, lorsque les extrémités 40 des vis situées sur le même bord latéral 37 des flasques 12 et 14 viennent au contact de la table 5, la cavité résonante correspondante est alors alignée avec l'axe 17 du milieu actif 2.

Sur la figure 5, le vérin 24, destiné à la commande du déplacement des cavités par l'intermédiaire du support, est articulé d'une part, autour d'un axe 41, à la chape 25 liée à la table, et d'autre part, autour d'un axe 42, au levier 26 qui présente une forme de secteur angulaire analogue à celle des flasques 12 et 14. Ce levier 26 est par exemple soudé à ladite tige 11.

Dans une variante de réalisation, on pourrait également agencer d'autres cavités résonantes supplémentaires en fonction du milieu actif utilisé.

Dans son application préférentielle, l'appareil à laser est équipé d'un câble à fibre optique (non représenté) recevant par l'une de ses extrémités le rayonnement émis par le système laser, tandis que son autre extrémité est munie d'un instrument chirurgical approprié.

Ainsi, par l'intermédiaire d'un commutateur ou analogue agissant sur le vérin qui entraîne le positionnement de l'une ou l'autre des cavités, le praticien peut utiliser le rayonnement approprié dont la longueur d'onde est spécifiquement adaptée à un type de traitement donné.

Par exemple, l'appareil à laser du type YAG permet l'émission, en fonction de la cavité résonante disposée en regard du milieu actif, d'un rayonnement dont la longueur d'onde peut être soit de 1,06 micromètre, soit de 1,32 micromètre. La première longueur d'onde est spécifiquement adaptée à la coagulation et à l'hémostase des tissus, tandis que la seconde longueur d'onde est, quant à elle, spécifiquement adaptée à la chirurgie.

On remarquera que, grâce à la présente invention, il est possible d'adjoindre un cristal adéquat ou un dispositif analogue dans une cavité spéciale ou à l'extérieur d'une cavité normale, afin d'obtenir une conversion de fréquence (harmonique 2).

## Revendications

1. Appareil à laser, du type comportant une cavité résonante (6) qui comprend un ensemble de deux réflecteurs (7, 8) différents, à l'intérieur de laquelle est disposé un milieu actif (2) susceptible d'engendrer un rayonnement sous l'action de moyens d'excitation reliés audit milieu actif, caractérisé en ce qu'il comporte au moins une cavité résonante supplémentaire (20), de structure semblable à la précédente, comprenant un ensemble de deux réflecteurs (21, 22) différents, et en ce qu'il est prévu des moyens (23) pour la commande du déplacement desdites cavités résonantes (6 et 20), permettant d'amener par basculement l'une ou l'autre desdites cavités coaxialement audit milieu actif (2), l'ensemble des réflecteurs (7, 8) de la cavité résonante (6) est porté par un support (10) susceptible d'être déplacé, sous l'action des moyens de commande (23) entre au moins deux positions distinctes, dont l'une correspond à l'alignement de l'ensemble des réflecteurs (7, 8) de ladite cavité résonante (6) avec ledit milieu actif (2), tandis que l'autre des positions correspond à l'effacement dudit ensemble par rapport audit milieu actif ; et l'ensemble des réflecteurs (21, 22) de la cavité résonante supplémentaire (20) est porté par un support (10) susceptible d'être déplacé, sous l'action des moyens de commande (23), entre au moins deux positions distinctes, dont l'une correspond à l'alignement de l'ensemble des réflecteurs (21, 22) de ladite cavité résonante supplémentaire (20) avec ledit milieu actif (2), tandis que l'autre des positions correspond à l'effacement dudit ensemble des réflecteurs (21, 22) de la cavité résonante supplémentaire (20) par rapport au milieu actif (2).

2. Appareil à laser selon la revendication 1, caractérisé en ce que les ensembles des réflecteurs (7, 8 et 21, 22) de la cavité résonante (6) et de la cavité résonante supplémentaire (20) sont portés par un même support (10) susceptible d'être déplacé entre au moins deux positions distinctes, dont l'une correspond à un alignement des réflecteurs (7, 8) de la cavité résonante (6) avec ledit milieu actif (2), et à l'effacement des réflecteurs (21, 22) de la cavité résonante supplémentaire (20) ; et dont l'autre correspond à un alignement des réflecteurs (21, 22) de la cavité résonante supplémentaire (20) avec ledit milieu actif (2) et un effacement des réflecteurs (7, 8) de la cavité résonante (6).

3. Appareil à laser selon la revendication 1 ou 2, caractérisé en ce que ledit support (10) portant les ensembles de réflecteurs desdites cavités est susceptible de pivoter, sous l'action des moyens de commande (23), autour d'un axe de rotation (27) disposé parallèlement à l'axe optique (17) du rayonnement émis par ledit milieu actif.

4. Appareil à laser selon l'une des revendications 2 ou 3, caractérisé en ce que des moyens de butée réglables (36) sont prévus sur ledit support (10) permettant, en fonction de la position des moyens de commande, le réglage de l'alignement desdites cavités (6 ou 20) par rapport audit milieu actif.

5. Appareil à laser selon l'une des revendications 2 à 4, caractérisé en ce que ledit support (10) est constitué par une tige (11) disposée parallèlement à l'axe dudit milieu actif, et sur laquelle sont fixés, au voisinage de ses extrémités, respectivement, des flasques transversaux (12, 14) dans lesquels sont agencés lesdits réflecteurs, chaque flasque transversal comprenant un réflecteur (7 ou 8) de la cavité résonante (6) et un réflecteur (21 ou 22) de chaque cavité résonante supplémentaire (20).

6. Appareil à laser selon la revendication 5, caractérisé en ce que ladite tige (11) est portée à ses extrémités par des paliers (18) solidaires d'une table (5).

7. Appareil à laser selon l'une des revendications 1 à 6, caractérisé en ce que lesdits moyens (23) pour la commande du déplacement desdites cavités sont constitués par au moins un vérin (24) ou analogue.

8. Appareil à laser selon la revendication 9, caractérisé en ce que ledit vérin (24) est articulé à l'une de ses extrémités à ladite table (5), tandis que son autre extrémité est articulée audit support (10).

9. Appareil à laser selon l'une des revendications 6 à 8, caractérisé en ce que chaque flasque (12, 14) présente deux moyens de butée (36) disposés approximativement dans le prolongement respectif des bords latéraux (37) dudit flasque.

10. Appareil à laser selon l'une des revendications 1 à 9, caractérisé en ce qu'il est équipé d'un câble à fibre optique recevant par l'une de ses extrémités le rayonnement émis par le système laser, tandis que son autre extrémité est munie d'un instrument chirurgical approprié, un commutateur ou analogue étant prévu pour agir sur le moyen (23) de commande en déplacement de positionnement des cavités résonantes (6, 20) en permettant ainsi aux praticiens d'utiliser le rayonnement approprié dont la longueur d'onde est spécifiquement adaptée à un type de traitement donné.

11. Appareil à laser selon l'une des revendications précédentes, caractérisé en ce que le laser est du type YAG, permettant l'émission d'un rayonnement dont la longueur d'onde peut être soit de 1,06 µm, soit de 1,32 µm, la première longueur d'onde étant spécifiquement adaptée à la coagulation et à l'hémostase des tissus, tandis que la seconde longueur d'onde est spécifiquement adaptée à la chirurgie.

12. Appareil à laser selon l'une des revendications précédentes, caractérisé en ce qu'il comprend un cristal adéquat ou un dispositif analogue dans une cavité spéciale ou à l'extérieur d'une cavité normale, afin d'obtenir une conversion de fréquence (harmonique 2).

## Claims

1. Laser apparatus of the type comprising a resonant cavity (6) which comprises an assembly of two different reflectors (7, 8), inside which is disposed an active medium (2) capable of generating a radiation under the action of excitation means connected to said active medium, characterized in that it comprises at least one supplementary resonant cavity (20), of structure similar to the preceding one, comprising an assembly of two different reflectors (21, 22), and in that means (23) are provided for controlling the displacement of said resonant cavities (6 and 20), making it possible to bring by tilting over one or the other of said cavities coaxially to said active medium (2), the assembly of the reflectors (7, 8) of the resonant cavity (6) is borne by a support (10) capable of being displaced, under the action of the control means (23), between at least two distinct positions, of which one corresponds to the alignment of the assembly of the reflectors (7, 8) of said resonant cavity (6) with said active medium (2), while the other of the positions corresponds to the retraction of said assembly with respect to said active medium; and the assembly of the reflectors (21, 22) of the supplementary resonant cavity (20) is borne by a support (10) capable of being displaced, under the action of the control means (23), between at least two distinct positions, of which one corresponds to the alignment of the assembly of the reflectors (21, 22) of said supplementary resonant cavity (20) with said active medium (2), while the other of the positions corresponds to the retraction of said assembly of the reflectors (21, 22) of the supplementary resonant cavity (20) with respect to the active medium (2).

2. Laser apparatus according to claim 1, characterized in that the assemblies of the reflectors (7, 8 and 21, 22) of the resonant cavity (6) and of the supplementary resonant cavity (20) are borne by the same support (10) capable of being displaced between at least two distinct positions, of which one corresponds to an alignment of the reflectors (7, 8) of the resonant cavity (6) with said active medium (2), and to the retraction of the reflectors (21, 22) of the supplementary resonant cavity (20) ; of which the other corresponds to an alignment of the reflectors (21, 22) of the supplementary resonant cavity (20) with said active medium (2), and a retraction of the reflectors (7, 8) of the resonant cavity (6).

3. Laser apparatus according to claim 1 or 2, characterized in that said support (10) bearing the assemblies of reflectors of said cavities is capable of pivoting, under the action of the control means (23), about an axis of rotation (27) disposed parallel to the optical axis (17) of the radiation emitted by said active medium.

4. Laser apparatus according to one of claims 2 or 3, characterized in that adjustable stop means (36) are provided on said support (10) allowing, as a function of the position of the control means, the adjustment of the alignment of said cavities (6 or 20) with respect to said active medium.

5. Laser apparatus according to one of claims 2 to 4, characterized in that said support (10) is constituted by a rod (11) disposed parallel to the axis of said active medium, and on which are fixed, in the vicinity of its ends, respectively, transverse side elements (12, 14) in which said reflectors are arranged, each transverse side element comprising a reflector (7 or 8) of the resonant cavity (6) and a reflector (21 or 22) of each supplementary resonant cavity (20).

6. Laser apparatus according to claim 5, characterized in that said rod (11) is borne at its ends by bearings (18) fixed to a table (5).

7. Laser apparatus according to one of claims 1 to 6, characterized in that said means (23) for controlling the displacement of said cavities are constituted by at least one jack (24) or the like.

8. Laser apparatus according to claim 7, characterized in that said jack (24) is articulated at one of its ends on said table (5) while its other end is articulated on said support (10).

9. Laser apparatus according to one of claims 6 to 8, characterized in that each side element (12, 14) presents two stop means (36) disposed approximately in respective extension of the lateral edges (37) of said side element.

10. Laser apparatus according to one of claims 1 to 9, characterized in that it is equipped with an optical fiber cable receiving by one of its ends the radiation emitted by the laser system, while its other end is provided with an appropriate surgical instrument, a switch or the like being provided to act on the means (23) for controlling the displacement of positioning of the resonant cavities (6, 20) thus making it possible for the practician to use the appropriate radiation of which the wave length is specifically adapted to a given type of treatment.

11. Laser apparatus according to one of the preceding claims, characterized in that the laser is of the YAG type, allowing the emission of a radiation of which the wave length may either be 1.06 micrometer or 1.32 micrometer, the first wave length being specifically adapted to the coagulation and to the haemostasis of the tissues, while the second wave length is specifically adapted to surgery.

12. Laser apparatus according to one of the preceding claims, characterized in that it comprises an adequate crystal or a similar device in a special cavity or outside a normal cavity, in order to obtain a frequency conversion (harmonic 2).

## Patentansprüche

1. Laserapparat, umfassend einen Resonanzraum (6) mit einer Gruppe von zwei unterschiedlichen Reflektoren (7, 8), in dessen Innerem ein aktives Medium (2) angeordnet ist, welches unter der Wirkung von mit dem aktiven Medium verbundenen Erregereinrichtungen eine Strahlung erzeugen kann, dadurch gekennzeichnet, daß er mindestens einen zusätzlichen Resonanzraum (20) von zum vorherigen gleichartiger Struktur mit einer Gruppe von zwei unterschiedlichen Reflektoren (21, 22) aufweist, und daß er mit Einrichtungen (23) zur Betätigung der Verstellung der Resonanzräume (6 und 20) versehen ist, mit denen der eine oder der andere Resonanzraum durch Kippen koaxial zum aktiven Medium (2) gebracht werden kann, daß die Gruppe der Reflektoren (7, 8) des Resonanzraums (6) von einem Träger (10) getragen ist, der unter der Wirkung der Betätigungseinrichtungen (23) zwischen mindestens zwei unterschiedlichen Positionen verschiebbar ist, von denen die eine der fluchtenden Anordnung der Gruppe der Reflektoren (7, 8) des Resonanzraums (6) mit dem aktiven Medium (2) entspricht, während die andere Position der Annulierung der fluchtenden Position der Gruppe mit dem aktiven Medium entspricht, und daß die Gruppe der Reflektoren (21, 22) des zusätzlichen Resonanzraums (20) von einem Träger (10) getragen ist, der unter der Wirkung der Betätigungseinrichtungen (23) zwischen mindestens zwei unterschiedlichen Positionen verstellbar ist, von denen die eine der fluchtenden Anordnung der Gruppe der Reflektoren (21, 22) des zusätzlichen Resonanzraums (20) mit dem aktiven Medium (2) entspricht, während die andere Position der Annulierung der fluchtenden Position der Gruppe der Reflektoren (21, 22) des zusätzlichen Resonanzraumes (20) mit dem aktiven Medium (2) entspricht.

2. Laserapparat nach Anspruch 1, dadurch gekennzeichnet, daß die Gruppen der Reflektoren (7, 8 und 21, 22) des Resonanzraumes (6) und des zusätzlichen Resonanzraumes (20) von ein- und demselben Träger (10) getragen sind, der zwischen mindestens zwei unterschiedlichen Positionen verschiebbar ist, von denen die eine der fluchtenden Anordnung der Gruppe der Reflektoren (7, 8) des Resonanzraumes (6) mit dem aktiven Medium (2) und der Annulierung der fluchtenden Anordnung der Reflektoren (21, 22) des zusätzlichen Resonanzraums (20) entspricht und die andere der fluchtenden Position der Reflektoren (21, 22) des zusätzlichen Resonanzraumes (20) mit dem aktiven Medium (2) und einer Annulierung der fluchtenden Anordnung der Reflektoren (7, 8) des Resonanzraumes (6) mit dem aktiven Medium (2) entspricht.

3. Laserapparat nach Anspruch 1 oder 2, dadurch gekennzeichnet, daß der die Reflektorgruppen der Resonanzräume tragende Träger (10) unter der Wirkung der Betätigungseinrichtungen (23) um eine Drehachse (27) schwenkbar ist, die parallel zur optischen Achse (17) der vom aktiven Medium emittierten Strahlung angeordnet ist.

4. Laserapparat nach einem der Ansprüche 2 oder 3, dadurch gekennzeichnet, daß regulierbare Anschlageinrichtungen (36) am Träger (10) vorgesehen sind, mit der die Regulierung der fluchtenden Anordnung der Resonanzräume (6 oder 20) mit dem aktiven Medium als Funktion der Position der Betätigungseinrichtungen möglich ist.

5. Laserapparat nach einem der Ansprüche 2 bis 4, dadurch gekennzeichnet, daß der Träger (10) durch eine Stange (11) gebildet ist, die parallel zur Achse des aktiven Mediums angeordnet ist und auf welcher nahe ihrem jeweiligen Ende Querflansche (12, 14) befestigt sind, an denen die Reflektoren angeordnet sind, wobei jeder Querflansch einen Reflektor (7 oder 8) des Resonanzraumes (6) und einen Reflektor (21 oder 22) jedes zusätzlichen Resonanzraumes (20) aufweist.

6. Laserapparat nach Anspruch 5, dadurch gekennzeichnet, daß die Stange (11) an ihren Enden auf mit einem Tisch (5) verbundenen Lagern (18) aufliegt.

7. Laserapparat nach einem der Ansprüche 1 bis 6, dadurch gekennzeichnet, daß die Einrichtungen (23) zur Betätigung der Verstellung der Resonanzräume durch mindestens einen Stelltrieb (24) od. dgl. gebildet sind.

8. Laserapparat nach Anspruch 9, dadurch gekennzeichnet, daß der Stelltrieb (24) mit einem seiner Enden am Tisch (5) angelenkt ist, während sein anderes Ende am Träger (10) angelenkt ist.

9. Laserapparat nach einem der Ansprüche 6 bis 8, dadurch gekennzeichnet, daß jeder Flansch (12, 14) zwei Anschlageinrichtungen (36) aufweist, die annähernd in der jeweiligen Verlängerung der Seitenränder (37) des Flansches angeordnet sind.

10. Laserapparat nach einem der Ansprüche 1 bis 9, dadurch gekennzeichnet, daß er mit einem Lichtleitfaserkabel ausgestattet ist, das über eines seiner Enden die vom Lasersystem emittierte Strahlung empfängt, während sein anderes Ende mit einem entsprechenden chirurgischen Instrument versehen ist, wobei ein Schalter od. dgl. zum Einwirken auf die Betätigungseinrichtung (23) zur Positionsverstellung der Resonanzräume (6, 20) vorgesehen ist, wodurch den Praktikern ermöglicht ist, die geeignete Strahlung, deren Wellenlänge speziell für eine gegebene Behandlungsart ausgelegt ist, zu verwenden.

11. Laserapparat nach einem der vorhergehenden Ansprüche, dadurch gekennzeichnet, daß der Laser vom YAG-Typ ist und die Emission einer Strahlung gestattet, deren Wellenlänge entweder 1,06 µm oder 1,32 µm sein kann, wobei die erste Wellenlänge speziell für die Koagulation und Hemostase von Geweben ausgelegt ist, während die zweite Wellenlänge speziell auf die Chirurgie abgestimmt ist.

12. Laserapparat nach einem der vorhergehenden Ansprüche, dadurch gekennzeichnet, daß er zur Erzielung einer Frequenzumwandlung (Oberschwingung 2) einen geeigneten Kristall oder eine analoge Einrichtung in einem speziellen Hohlraum oder außerhalb eines normalen Hohlraums aufweist.
